# FASCICULE DE BREVET EUROPEEN

(11) **EP 2 411 249 B1**
(45) Date de publication et mention de la délivrance du brevet: **20.11.2013**
(21) Numéro de dépôt: 10716582.1
(22) Date de dépôt: 26.03.2010
(51) Int. Cl.: B60R 21/26, B60R 21/0136, B60R 21/0134, B60R 21/264

(54) **GENERATEUR DE GAZ POUR COUSSIN GONFLABLE DE SECURITE AUTOMOBILE**
GASGENERATOR FÜR KRAFTFAHRZEUGAIRBAG
GAS GENERATOR FOR VEHICLE AIRBAG

(30) Priorité: 27.03.2009 FR 0901487
(43) Date de publication de la demande: 01.02.2012
(73) Titulaire: HERAKLES, 33185 Le Haillan (FR)
(72) Inventeur: BORG, Evrard, F-33600 Pessac (FR); LASPESA, Eric, 84210 Althen des Paluds (FR); NADEAU, Jean-Paul, F-83190 Ollioules (FR)
(74) Mandataire: Henrich, Christel
(86) Numéro de dépôt international: PCT/FR2010/050558
(87) Numéro de publication internationale: WO 2010/109153

(56) Documents cités:
- WO-A-2005/110818
- US-A1- 2005 161 922
- US-B1- 6 314 889

## Description

L'invention concerne un système de sécurité destiné au gonflage d'un coussin de sécurité automobile, aussi dit airbag, muni d'un générateur de gaz pyrotechnique comprenant une charge pyrotechnique. Plus particulièrement, l'invention concerne un système de sécurité comprenant un générateur de gaz pyrotechnique à deux régimes de fonctionnement, apte à être déclenché par un ordre préalable au choc ou au moment du choc.

L'industrie automobile a développé ces deux dernières décennies des systèmes de coussins gonflables destinés à protéger les passagers de véhicules en cas de collision. Ces coussins gonflables sont généralement déployés au moyen de gaz chauds délivrés par un générateur de gaz pyrotechnique. En cas de collision, le coussin doit se déployer rapidement et doit rester gonflé suffisamment longtemps après le choc. Les générateurs de gaz pyrotechniques sont donc prévus pour fonctionner dans une période de temps brève, de l'ordre de quelques dizaines de millisecondes.

La majorité des véhicules sont aujourd'hui équipés de systèmes de sécurité de type airbag, dont la plupart sont déclenchés au moment où le véhicule entre effectivement en contact avec un obstacle, c'est-à-dire en cas de collision avérée.

Ce déclenchement est réalisé par des accéléromètres placés sur la structure du véhicule (boucliers, pièces latérales), qui informent de l'accident une centrale de commande électronique. Après vérification et bouclages, la centrale de commande envoie à des systèmes pyrotechniques du coussin gonflable un signal électrique de déclenchement.

Les systèmes doivent alors se déployer en un temps très bref et le gonflage des coussins de sécurité (de l'ordre de 50 à 100 litres en 30 à 40 ms) est nécessairement violent, ce qui peut nuire aux occupants si ceux-ci sont mal positionnés à l'intérieur du véhicule.

Depuis peu, de nouveaux systèmes de détection, basés sur des détecteurs sans contact (caméras vidéo, capteurs infrarouge ou hyperfréquence, etc.), permettent d'anticiper une collision. Couplés à un traitement informatique des signaux, ces systèmes de détection permettent d'évaluer de façon fiable l'imminence d'une collision. On estime en l'état actuel des connaissances que ces systèmes de détection sont aptes à actionner les systèmes de sécurité, sans risque d'erreur, quelques 100 millisecondes avant une collision. En permettant de déclencher les divers systèmes de sécurité, et en particulier le ou les airbags, plus tôt que dans les systèmes classiques décrits précédemment, ces nouveaux systèmes de détection permettent de réaliser le gonflage des airbags sur une période de temps plus longue, de l'ordre de 150 millisecondes, autorisant un fonctionnement moins brutal qui diminue les risques pour les passagers mal positionnés à l'intérieur du véhicule au moment de l'impact.

Toutefois, ces nouveaux systèmes de détection de collision imminente n'étant pas matures, les constructeurs automobiles souhaiteraient, pour l'instant, disposer de systèmes pyrotechniques birégimes, pouvant fonctionner différemment selon le type de détection : en fonctionnement classique lors de la détection d'une collision avérée, le gonflage des coussins de sécurité étant alors réalisé rapidement, par exemple en environ 30 à 40 millisecondes, ou en fonctionnement « lent » lors de la détection d'une collision imminente, la durée du gonflage pouvant alors avoisiner les 120 à 150 millisecondes.

La centrale de commande sélectionnerait le mode de fonctionnement adapté en fonction du type de détection et des informations transmises par les divers capteurs.

Des solutions techniques ont d'ores et déjà été proposées pour le contrôle de la pression à l'intérieur de coussins de sécurité automobile. Les brevets US 5 234 229 et EP 1 661 766, par exemple, concernent des airbags équipés d'un générateur de gaz pyrotechnique permettant le pilotage d'évents pour détourner les gaz en dehors du coussin de sécurité. Dans ces systèmes, on règle une « fuite » de la chambre de combustion selon le mode de fonctionnement souhaité. Il ne s'agit pas de piloter le générateur de gaz pyrotechnique lui-même en fonction du moment où a été détectée la collision.

Le brevet WO 2005/110818 A1 concerne un système de sécurité selon le préambule de la revendication 1.

La présente invention a donc pour objet un générateur de gaz pyrotechnique pouvant adapter la vitesse de gonflage d'un coussin de sécurité de véhicule automobile selon qu'un système de détection a détecté une collision imminente ou une collision avérée.

Plus particulièrement, l'invention concerne un système de sécurité destiné au gonflage d'un coussin de sécurité automobile, comprenant un premier système de détection destiné à détecter un état de collision imminente, un second système de détection destiné à détecter un état de collision avérée, et un générateur de gaz pyrotechnique pour coussin gonflable de sécurité automobile, comprenant une charge pyrotechnique, un initiateur pyrotechnique situé dans une chambre de combustion et apte à être actionné par le premier système de détection ou par le second système de détection; un passage d'écoulement des gaz entre ladite chambre de combustion et ledit coussin gonflable, et au moins un clapet apte à être déplacé d'une première position dans laquelle il définit une première section d'écoulement à travers le passage d'écoulement des gaz vers une seconde position dans laquelle il définit une seconde section d'écoulement à travers le passage d'écoulement des gaz supérieure à ladite première section d'écoulement, ou inversement, ledit clapet étant agencé de sorte que, si l'initiateur pyrotechnique est actionné par le premier système de détection, le clapet définit la plus grande section d'écoulement lorsque l'initiateur pyrotechnique est actionné, et si l'initiateur pyrotechnique est actionné par le second système de détection, le clapet définit la plus petite section d'écoulement lorsque l'initiateur pyrotechnique est actionné.

La vitesse de gonflage d'un coussin de sécurité automobile est d'autant plus rapide que le débit de gaz en sortie de la chambre de combustion du générateur de gaz est important. Or ce débit dépend de la pression régnant dans la chambre de combustion, cette pression étant fonction de l'aire du passage d'écoulement des gaz de la chambre de combustion vers l'intérieur du coussin de sécurité et de la surface en combustion de la charge pyrotechnique. Pour régler le débit de gaz en sortie de la chambre de combustion, la présente invention propose de faire varier la section d'écoulement des gaz de la chambre de combustion vers l'intérieur du coussin de sécurité grâce à un clapet mobile. Ainsi, il est possible de définir, selon le type de détection de la collision (anticipée ou non), une première section d'écoulement permettant un gonflage « lent » du coussin de sécurité, ou une seconde section d'écoulement permettant son gonflage « rapide ». Dans le cas où une collision est détectée par un système de détection d'une collision imminente, le générateur de gaz est déclenché par un ordre préalable au choc et la section d'écoulement des gaz est réglée de sorte que le gonflage puisse se faire « lentement » et en douceur, tirant parti du temps gagné par l'anticipation du choc par rapport aux systèmes classiques de détection. En d'autres termes, si l'initiateur pyrotechnique est actionné par un système de détection d'un état de collision imminente, le clapet est agencé de manière à définir la plus grande section d'écoulement. Dans le cas où, au contraire, la collision est détectée par un système de détection d'une collision avérée, la section d'écoulement des gaz est réglée de sorte que le gonflage du coussin de sécurité se fait suffisamment rapidement pour que les passagers du véhicule soient protégés pendant et après le choc. En d'autres termes, si l'initiateur pyrotechnique est actionné par un système de détection d'un état de collision avérée, le clapet est agencé de manière à définir la section d'écoulement la plus faible.

La charge pyrotechnique intégrée dans le générateur de gaz pyrotechnique du système de sécurité selon la présente invention doit être adaptée à une combustion « lente » ou « rapide » selon le type de détection de la collision (anticipée ou non). La demande de brevet FR 2 915 746 A1 décrit une composition de la charge pyrotechnique adaptée à ces deux modes de fonctionnement.

Le passage d'écoulement des gaz peut par exemple être constitué d'au moins deux orifices formés dans la chambre de combustion, ledit clapet étant apte à obturer au moins un desdits orifices.

Le clapet peut par exemple être déplacé de sa première position vers sa seconde position, ou inversement, sous l'effet de gaz libérés par une charge pyrotechnique allumée par un initiateur d'actionnement pyrotechnique.

Le clapet peut par exemple être un tiroir apte à être déplacé selon une trajectoire rectiligne. Le clapet peut également être un tiroir rotatif comprenant au moins une ouverture apte à être positionnée en regard d'au moins un orifice de la chambre de combustion et au moins une rampe de guidage, ledit tiroir rotatif étant apte à être déplacé sous l'effet d'un piston actionné par des gaz libérés par une charge pyrotechnique allumée par un initiateur d'actionnement pyrotechnique et coopérant avec ladite rampe de guidage. Le clapet peut également présenter une forme de pointeau.

Selon un autre exemple de réalisation de l'invention, le clapet est sollicité par un ressort initialement sous contrainte et libéré par un dispositif inertiel s'activant à partir d'un seuil de décélération.

Selon un autre exemple de réalisation, le clapet est sollicité par un ressort initialement sous contrainte et libéré par un fusible thermique connecté à un circuit électrique.

Selon encore un autre exemple de réalisation, le clapet est sollicité par un ressort initialement sous contrainte et libéré par une gâchette électromagnétique.

La présente invention concerne également la combinaison d'un coussin gonflable pour sécurité automobile et d'un générateur de gaz pyrotechnique tel que décrit précédemment auquel est rattaché ledit coussin gonflable.

La présente invention concerne également un système de sécurité destiné au gonflage d'un coussin de sécurité automobile, comprenant un générateur de gaz pyrotechnique tel que décrit précédemment, un premier système de détection destiné à détecter un état de collision imminente et un second système de détection destiné à détecter un état de collision avérée.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- les figures 1A et 1B illustrent un premier mode de réalisation d'un générateur de gaz selon la présente invention,
- les figures 2A à 2C illustrent un second mode de réalisation d'un générateur de gaz selon la présente invention,
- les figures 3A et 3B illustrent un troisième mode de réalisation d'un générateur de gaz selon la présente invention,
- les figures 4A et 4B illustrent un quatrième mode de réalisation d'un générateur de gaz selon la présente invention,
- les figures 5A et 5B illustrent un cinquième mode de réalisation d'un générateur de gaz selon la présente invention,
- les figures 6A et 6B illustrent un sixième mode de réalisation d'un générateur de gaz selon la présente invention,
- les figures 7A et 7B illustrent un huitième mode de réalisation d'un générateur de gaz selon la présente invention.

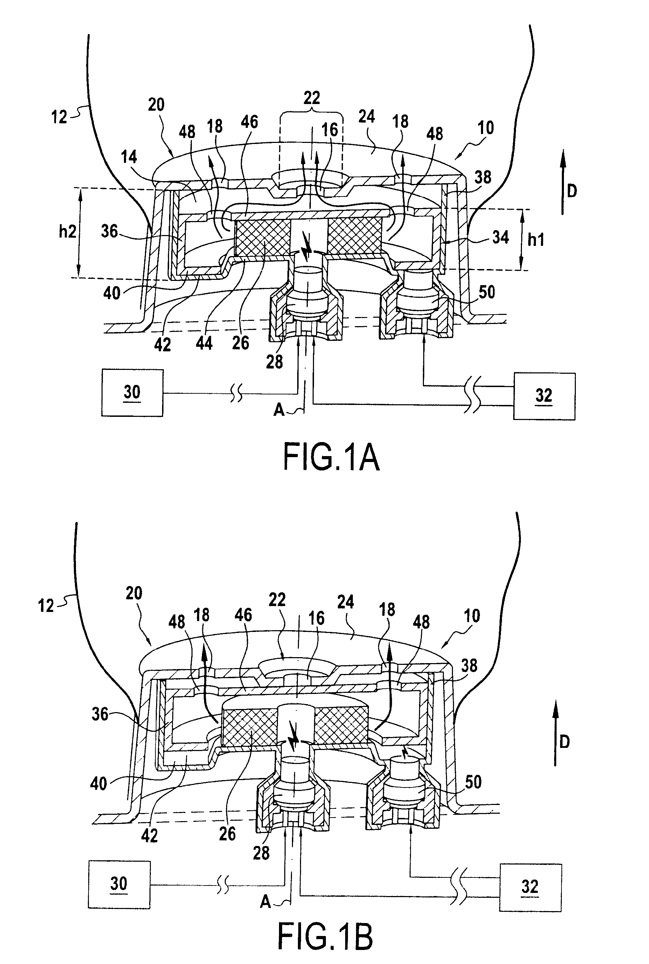

Sur les figures 1A et 1B, on a représenté un générateur de gaz pyrotechnique 10 destiné au gonflage d'un coussin de sécurité automobile 12. Le générateur de gaz 10 comprend une chambre de combustion 14, qui communique avec l'intérieur du coussin gonflable de sécurité 12 grâce à une pluralité d'orifices 16, 18 constituant un passage d'écoulement des gaz.

Pour toute la suite de la description, on définit la direction axiale extérieure du générateur de gaz 10 comme la direction dans laquelle se dilate le coussin gonflable 12 lorsqu'il est gonflé sous l'effet des gaz émanant de la chambre de combustion 14 (cette direction est représentée par une flèche D sur la figure 1A). A l'inverse, on définit la direction axiale intérieure comme celle pointant vers la structure dans laquelle est monté le générateur de gaz (tableau de bord par exemple).

On définit également un gonflage « rapide » et un gonflage « lent » du coussin de sécurité de la manière suivante : on considère que le gonflage du coussin de sécurité 12 est « lent » lorsque celui-ci débute dès la détection d'une collision imminente. A ce moment, le choc n'est pas encore intervenu. Le gonflage est donc réalisé plus doucement, en tirant tout le parti du temps supplémentaire disponible grâce à l'anticipation de la collision. A contrario, on considère que le gonflage du coussin de sécurité est rapide lorsque celui-ci débute après qu'une collision avérée a été détectée.

Dans le mode de réalisation représenté, la chambre de combustion 14 est annulaire, d'axe A. La paroi d'extrémité axiale extérieure 20 de la chambre de combustion 14, qui fait face au coussin gonflable 12, comporte une portion centrale 22 entourée par une portion périphérique 24. La portion centrale 22, définie dans un plan perpendiculaire à l'axe A de la chambre de combustion 14, est positionnée légèrement en retrait vers l'intérieur du générateur de gaz 10, par rapport à la portion périphérique 24. Dans l'exemple de réalisation représenté, les portions périphérique et centrale de la paroi d'extrémité axiale extérieure 20 sont parallèles entre elles. Comme variante, on pourrait par exemple imaginer que la portion périphérique 24 de la paroi d'extrémité 20 de la chambre de combustion présente une forme sensiblement conique, s'évasant à partir de la portion centrale 22 vers l'extérieur du générateur de gaz 10.

Dans le générateur de gaz représenté sur les figures 1A et 1B, deux orifices 18 diamétralement opposés sont prévus dans la portion périphérique 24 et un orifice 16 est formé dans la portion centrale 22. Comme variante, on pourra prévoir une pluralité d'orifices répartis circonférentiellement sur la portion périphérique 24 de la paroi d'extrémité axiale extérieure 20 de la chambre de combustion 14. On pourra également prévoir une pluralité d'orifices répartis sur la portion centrale 22 de la chambre de combustion 14.

La chambre de combustion 14 contient une charge pyrotechnique 26, par exemple un bloc de propergol solide ou un chargement pastillé. Cette charge pyrotechnique 26 est apte à être allumée sous l'effet d'un initiateur pyrotechnique 28 situé dans la chambre de combustion 14.

Comme illustré sur la figure 1A, l'initiateur pyrotechnique 28 est relié à deux systèmes de détection de collision 30, 32, et peut être déclenché par celui, quelconque, de ces deux systèmes ayant fonctionné en premier. Pour toute la suite de la description, le premier système de détection 30 permet de détecter une collision imminente grâce à des détecteurs sans contact du type caméra vidéo, ou capteur infrarouge. Le second système de détection 32 est destiné à la détection d'une collision avérée. Par exemple, des accéléromètres (non représentés) peuvent être prévus sur la structure du véhicule. Ceux-ci informent de la collision une centrale de commande électronique qui envoie à l'initiateur pyrotechnique 28 un signal électrique de déclenchement.

Comme illustré sur la figure 1A, le générateur de gaz 10 comprend au moins un tiroir formant clapet 34, placé dans la chambre de combustion 14 et apte se déplacer à l'intérieur de celle-ci, selon une trajectoire rectiligne, et en particulier selon l'axe A. Pour cela, le tiroir 34 comporte une jupe 36 de hauteur h1 inférieure à la hauteur h2 de la chambre de combustion 14, et apte à coulisser le long de la paroi radiale 38 de la chambre de combustion 14. A son extrémité axiale intérieure, la jupe 36 du tiroir 34 comporte une bordure annulaire 40 repliée à 90° vers l'intérieur du tiroir 34. Comme illustré sur la figure 1A, cette bordure annulaire 40 est apte à venir s'introduire dans une gorge annulaire 42 de forme correspondante formée dans la paroi d'extrémité axiale intérieure 44 de la chambre de combustion 14.

Grâce aux dispositions précédentes, le tiroir 34 peut se déplacer, autour de la charge pyrotechnique 26, entre une première position représentée sur la figure 1A, dans laquelle le tiroir 34 est en appui contre la paroi d'extrémité axiale intérieure 44 de la chambre de combustion 14, et une seconde position représentée sur la figure 1B, dans laquelle le tiroir 34 vient prendre appui contre la portion centrale 22 de la paroi d'extrémité axiale extérieure 20 de la chambre de combustion 14, obturant ainsi l'orifice 16 prévu dans cette portion centrale 22. Quelle que soit la position du tiroir 34 à l'intérieur de la chambre de combustion 14, l'écoulement des gaz émanant de la charge pyrotechnique 26 vers l'extérieur du tiroir 34 puis vers l'intérieur du coussin de sécurité 12 est assuré par des ouvertures 48 prévues dans la paroi axiale extérieure 46 du tiroir 34. Avantageusement, ces ouvertures 48 sont situées en regard des orifices 18 de la portion périphérique 24 de la face axiale extérieure 20 de la chambre de combustion 14. On comprendra en lisant la suite de la description, que ces ouvertures 48 ne doivent pas être situées en regard de la portion centrale 22. Lorsque le tiroir 34 se trouve dans sa première position, l'ensemble des orifices 16, 18 de la face extérieure 20 de la chambre de combustion 14 forment une première section d'écoulement. Lorsque le tiroir 34 se trouve dans sa seconde position, une seconde section d'écoulement, inférieure à la première section d'écoulement, est définie par les seuls orifices 18 formés dans la portion périphérique 24 de la face extérieure 20 de la chambre de combustion 14.

Le débit massique d'un bloc de propergol solide ou d'un chargement pastillé est d'autant plus important que la pression P régnant dans la chambre de combustion 14 est élevée, la pression P étant fonction du rapport entre l'aire des orifices d'échappement des gaz 16, 18 et la surface en combustion du bloc de propergol solide ou du chargement pastillé. Pour un même bloc de propergol solide placé dans la chambre de combustion 14, le débit de gaz s'écoulant vers le coussin de sécurité 12 est donc plus important lorsque la section d'écoulement des gaz est plus faible, la pression P à l'intérieur de la chambre de combustion 14 étant alors plus élevée. En conséquence, le coussin de sécurité 12 est gonflé plus rapidement dans un cas où le tiroir de sécurité 34 se trouve dans sa seconde position que dans le cas où le tiroir 34 se trouve dans sa première position.

Sur la figure 1A, on a représenté le générateur de gaz pyrotechnique 10 dans son état initial. Le tiroir 34 se trouve dans sa première position, et la section d'écoulement des gaz entre la chambre de combustion 14 et le coussin gonflable de sécurité 12 est maximale.

Comme énoncé précédemment, l'initiateur pyrotechnique 28 est relié à la fois au premier et au second système de détection 30, 32. Dans le cas où le premier système de détection 30 fonctionne en premier, c'est-à-dire si une collision imminente est détectée de manière anticipée, l'initiateur pyrotechnique 28 allume la charge pyrotechnique 26 préalablement au choc, et le coussin de sécurité 12 est gonflé « lentement » sous l'effet des gaz produits, s'échappant par la pluralité d'orifices 16, 18 de la chambre de combustion 14.

Considérons à présent le cas où le premier système de détection 30 n'a pas fonctionné. Le second système de détection 32, plus fiable, détecte la collision au moment du choc et actionne immédiatement l'initiateur pyrotechnique 28, qui allume la charge pyrotechnique 26. A cet instant, si le générateur de gaz 10 restait dans son état initial (figure 1A), le débit de gaz s'échappant de la chambre de combustion 14 serait trop faible et ne permettrait pas le gonflage total, à temps, du coussin de sécurité 12. Le coussin de sécurité 12 ne serait pas suffisamment gonflé pour protéger les passagers du véhicule contre la violence du choc.

Par conséquent, le générateur de gaz 10 selon la présente invention prévoit que le tiroir formant clapet 34 puisse être déplacé de sa première position (figure 1A) vers sa seconde position (figure 1B) lors de la détection d'une collision avérée par le second système de détection 32. Pour cela, un initiateur d'actionnement pyrotechnique 50, relié au second système de détection 32 et apte à être actionné exclusivement par ce dernier, est placé sur le côté intérieur de la chambre de combustion 14. Lorsque l'initiateur d'actionnement pyrotechnique 50 est actionné, il libère un gaz dans la chambre formée par la gorge annulaire 42 de la chambre de combustion 14 et la bordure annulaire 40 du tiroir 34. Ce gaz, en exerçant un effort sur la bordure annulaire 40, entraîne le déplacement du tiroir 34 de sa première vers sa seconde position. Dans cette seconde position, la section d'écoulement des gaz, initialement constituée de l'ensemble des orifices 16, 18 de la chambre de combustion, est diminuée (de la section de l'orifice 16 de la portion centrale 22), de sorte que le débit de gaz en sortie de la chambre de combustion 14 est plus important. Lorsqu'une collision avérée est détectée, le générateur de gaz 10 assure donc un gonflage « rapide » du coussin de sécurité 12, permettant de sécuriser les passagers du véhicule.

On pourra également prévoir que l'initiateur d'actionnement pyrotechnique 50 soit déclenché par le second système de détection 32 même si le premier système de détection 30 a fonctionné correctement au préalable. De cette façon, le gonflage du coussin de sécurité 12 se fera en deux temps, « lentement » jusqu'au fonctionnement du second système de détection 32, puis plus rapidement.

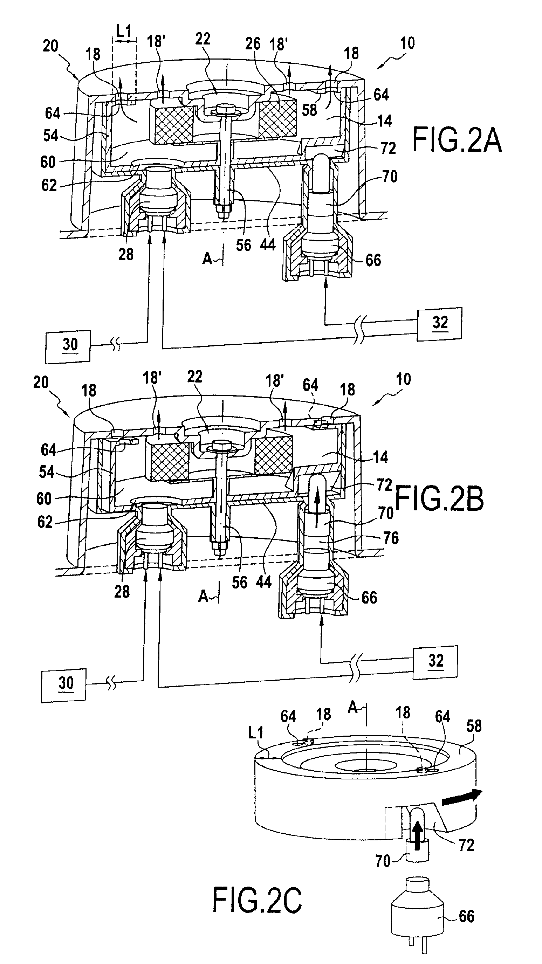

Les figures 2A à 2C représentent un générateur de gaz selon un second mode de réalisation de la présente invention. Les références numériques correspondant à des éléments communs avec le premier mode de réalisation restent identiques pour toute la suite de la description.

Dans ce second mode de réalisation, la chambre de combustion 14 présente quatre orifices 18, 18' diamétralement répartis sur sa paroi d'extrémité axiale extérieure 20. Evidemment selon d'autres exemples de réalisation de l'invention, la chambre de combustion pourra comprendre un nombre différent d'orifices répartis différemment.

A l'intérieur de la chambre de combustion 14, un tiroir 54 formant clapet est monté rotatif autour d'un axe 56 s'étendant selon l'axe A.

Pour l'entraînement en rotation du tiroir 54, le générateur de gaz 10 comporte un initiateur d'actionnement pyrotechnique 66. En réponse à un signal de déclenchement transmis par un détecteur de collision, l'initiateur d'actionnement pyrotechnique 66 est apte à allumer une charge pyrotechnique libérant des gaz qui permettent de déplacer un piston 70. Comme illustré sur la figure 2C, le piston 70 est positionné en regard d'une rampe de guidage 72 du tiroir rotatif 54. Ainsi, lorsque l'initiateur d'actionnement pyrotechnique 66 est déclenché, le piston vient en appui contre la rampe de guidage 72 du tiroir 54, entraînant la rotation dudit tiroir 54 à l'intérieur de la chambre de combustion 14.

A son extrémité axiale extérieure, le tiroir 54 comporte une bordure annulaire 58 en appui contre la paroi d'extrémité axiale extérieure 20 de la chambre de combustion 14. Par ailleurs, la paroi de fond 60 du tiroir 54 est en appui contre la paroi d'extrémité axiale intérieure 44 de la chambre de combustion 14. On notera qu'une ouverture 62 est prévue dans la paroi de fond 60 du tiroir 54, pour permettre la liaison entre l'initiateur pyrotechnique 28 et la charge pyrotechnique 26 située dans la chambre de combustion 14 et entourée par le tiroir 54.

La bordure annulaire 58 du tiroir 54 comporte deux ouvertures 64, dont chacune est apte à se positionner en regard d'un orifice 18 de la chambre de combustion 14. La largeur radiale L1 de la bordure annulaire 58 est prévue pour que celle-ci ne recouvre pas les deux orifices 18' situés radialement le plus à l'intérieur de la chambre de combustion 14.

Les orifices 18 de la chambre de combustion et les ouvertures 64 du tiroir 54 sont donc agencés de telle sorte qu'est définie, pour une première position angulaire du tiroir 54 à l'intérieur de la chambre de combustion 14, une première section d'écoulement des gaz entre la chambre de combustion 14 et le coussin gonflable de sécurité 12. Dans l'exemple envisagé, cette première section d'écoulement des gaz est égale à la somme des sections de l'ensemble des orifices 18, 18' de la chambre de combustion 14. Les deux orifices situés radialement à l'intérieur 18' ne sont pas en contact avec la bordure annulaire 58 et restent donc ouverts. Les deux autres orifices 18 situés radialement plus à l'extérieur de la chambre de combustion 14 communiquent avec les ouvertures 64 du tiroir 54 et assurent donc également l'écoulement des gaz.

En se déplaçant angulairement à l'intérieur de la chambre de combustion 14, le tiroir rotatif 54 est apte à se placer dans une seconde position, dans laquelle est définie une seconde section d'écoulement des gaz, inférieure à la première section d'écoulement des gaz définie ci-dessus. Lorsque le tiroir 54 se trouve dans sa seconde position, les deux orifices 18 de la chambre de combustion 14 situés en regard de la bordure annulaire 58 du tiroir 54 se retrouvent obturés par ladite bordure 58, tandis que les deux autres orifices 18' continuent d'assurer le passage des gaz entre la chambre de combustion 14 et l'intérieur du coussin de sécurité 12.

Sur la figure 2A, on a représenté le générateur de gaz 10 dans son état initial. Le tiroir 54 se trouve dans sa première position angulaire, de sorte que la section d'écoulement des gaz est maximale. Comme dans le premier mode de réalisation, l'initiateur pyrotechnique est relié aux deux systèmes de détection de collision 30, 32, tandis que l'initiateur d'actionnement pyrotechnique 66 n'est relié, lui, qu'au second système de détection 32. Si le premier système de détection 30 détecte une collision imminente, l'initiateur pyrotechnique 28 est déclenché et allume la charge pyrotechnique 26. La section d'écoulement des gaz reste maximale, de sorte que le coussin de sécurité 12 est gonflé « lentement ».

En cas de fonctionnement du second système de détection 32, celui-ci actionne conjointement l'initiateur pyrotechnique 28 et l'initiateur d'actionnement pyrotechnique 66. L'initiateur d'actionnement pyrotechnique 66 allume alors une charge pyrotechnique libérant des gaz dans une chambre de piston 76. Le piston, situé en regard de la rampe de guidage 72 du tiroir 54, est déplacé vers l'extérieur dans la direction axiale A sous l'effet des gaz libérés par la charge pyrotechnique. Grâce à la rampe de guidage 72, le piston 70 entraîne dans sa course la rotation du tiroir 54. La section d'écoulement des gaz est alors diminuée, entraînant une augmentation de la pression à l'intérieur de la chambre de combustion 14, une augmentation du débit de sortie de gaz, et donc une augmentation de la vitesse de gonflage du coussin de sécurité 12, qui est gonflé « rapidement ».

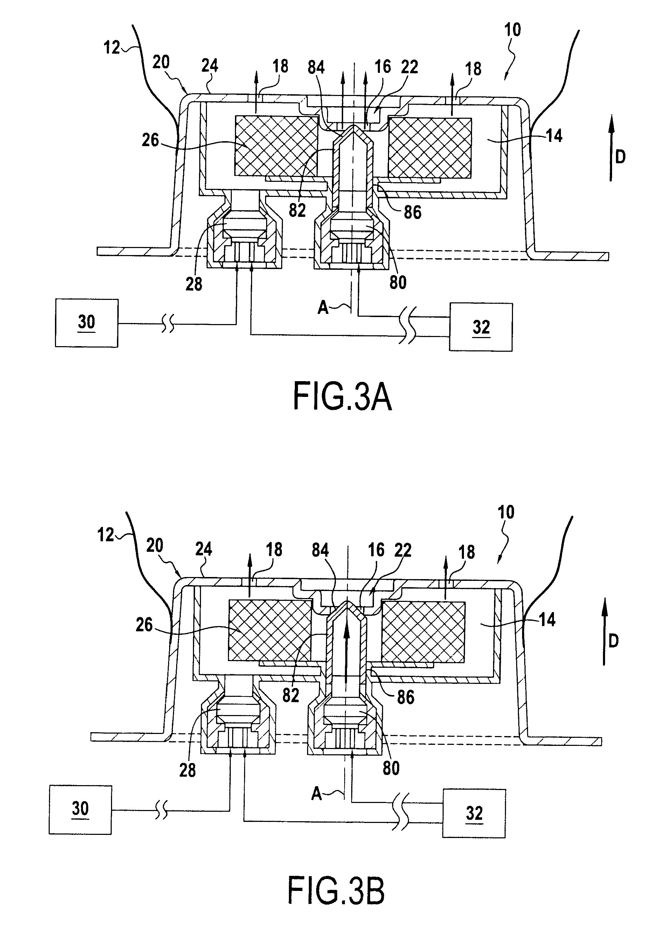

Les figures 3A et 3B illustrent un troisième mode de réalisation d'un générateur de gaz pyrotechnique selon la présente invention. Comme dans les deux modes de réalisation précédents, le générateur de gaz pyrotechnique 10 comprend un initiateur pyrotechnique 28 relié au premier 30 et au second système de détection 32, et apte à être déclenché par celui de ces deux systèmes de détection 30, 32 ayant fonctionné en premier.

Comme illustré sur la figure 3A, et d'une manière similaire au premier mode de réalisation décrit en référence aux figures 1A et 1B, la chambre de combustion 14 comporte une paroi d'extrémité axiale extérieure 20 comprenant une portion périphérique 24 dans laquelle sont formés deux orifices de sorties des gaz 18 et une portion centrale 22 dans laquelle est formé un orifice de sortie des gaz 16. Evidemment, selon d'autres exemples de réalisation de l'invention, la chambre de combustion pourra comprendre un nombre différent d'orifices de sortie, répartis différemment.

En regard de l'orifice 16 formé dans la portion centrale 22 de la paroi d'extrémité 20 de la chambre de combustion 14 est prévu un initiateur d'actionnement pyrotechnique 80 relié au second système de détection et surmonté d'une tige cylindrique 82 terminée par un pointeau 84 formant clapet. La tige cylindrique est apte à coulisser dans une portée de guidage cylindrique 86 prévue dans la chambre de combustion 14. En allumant une charge, l'initiateur d'actionnement pyrotechnique 80 entraîne la libération de gaz à l'intérieur de la tige cylindrique 82. Sous l'effet des gaz libérés, celle-ci coulisse dans la portée de guidage 86, dans la direction axiale A, vers l'extérieur du générateur de gaz 10, de sorte que le pointeau 84 vient obturer l'orifice 16 de la chambre de combustion 14.

Comme dans les deux modes de réalisation précédents, le générateur de gaz 10 est tel qu'à l'état initial, l'ensemble des orifices 16, 18 de la chambre de combustion 14 permet le passage des gaz vers le coussin de sécurité 12 et définit une première section d'écoulement des gaz. La section d'écoulement est diminuée si le second système de détection 32 est actionné. Ce peut être le cas si le premier système de détection 30 n'a pas fonctionné correctement, ou si le générateur 10 a été prévu pour que le second système de détection 32 se mette en marche lors du choc, bien que le premier système de détection 30 ait d'ores et déjà déclenché le gonflage « lent » du coussin de sécurité 12. Dans ce dernier cas, le gonflage se fera en deux temps : une phase « lente » préalablement au choc, puis une phase « rapide », après le choc.

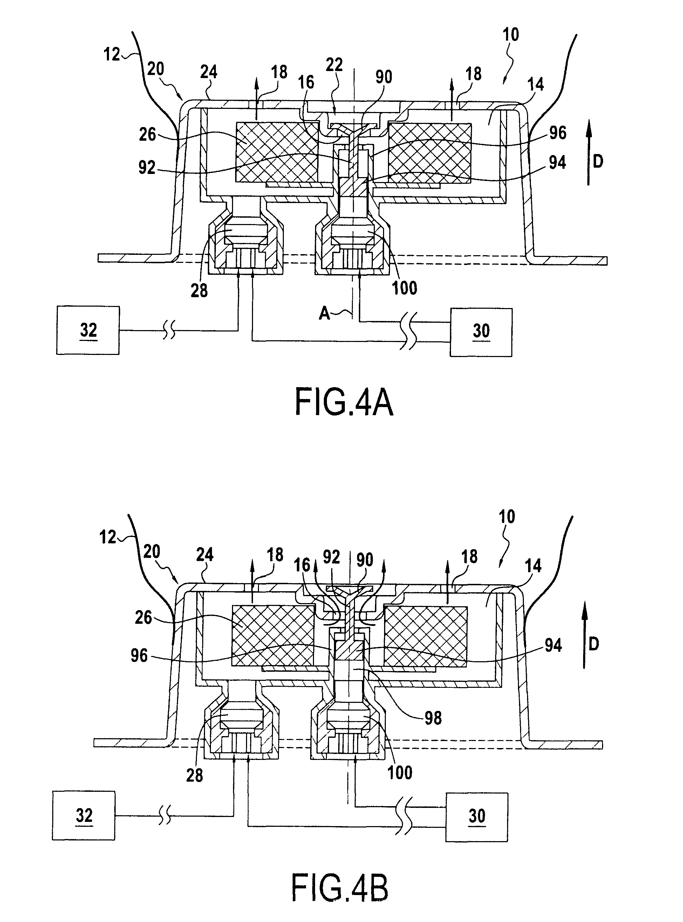

Sur les figures 4A et 4B, on a représenté un quatrième mode de réalisation de l'invention.

Comme illustré sur la figure 4A, le générateur de gaz 10 comprend ici un clapet 90 apte à venir en appui sur la face externe de la paroi d'extrémité extérieure 20 de la chambre de combustion 14 afin d'obturer l'orifice 16 formé dans la portion centrale 22. Comme variante, le clapet 90 pourra être destiné à obturer tout autre orifice prévu dans la chambre de combustion 14.

En son centre, le clapet 90 est relié à une tige de piston 92 traversant l'orifice 16 de la chambre de combustion 14. Cette tige 92 est liée à un piston 94, apte à coulisser dans un logement annulaire 96 prévu dans la chambre de combustion du générateur de gaz et formant une chambre de piston 98.

Le générateur de gaz comporte un initiateur d'actionnement pyrotechnique 100, apte à être déclenché ici par le premier système de détection 30, et prévu pour allumer une charge pyrotechnique afin de libérer, dans la chambre de piston 98, des gaz destinés à déplacer le piston dans la direction axiale A.

Le fonctionnement du générateur de gaz est inversé par rapport aux modes de réalisation précédents.

Le clapet 90 est initialement positionné de manière à obturer l'orifice 16 de la portion centrale 22 de la chambre de combustion 14 et ainsi à définir une section d'écoulement des gaz limitée, permettant un gonflage « rapide » du coussin de sécurité.

Comme énoncé précédemment, l'initiateur pyrotechnique 28 est relié aux deux systèmes de détection 30, 32 tandis que l'initiateur d'actionnement pyrotechnique 100 n'est relié qu'au premier système de détection d'une collision imminente 30.

Si le premier système de détection 30 détecte une collision imminente, il déclenche simultanément l'initiateur pyrotechnique 28 et l'initiateur d'actionnement pyrotechnique 100. L'initiateur pyrotechnique 28 initie la combustion de la charge pyrotechnique 26 située dans la chambre de combustion 14 et déclenche ainsi le gonflage du coussin de sécurité 12. Dans le même temps, l'initiateur d'actionnement pyrotechnique 100 allume la charge pyrotechnique située dans la chambre de piston 98, ce qui entraîne le déplacement du piston 94, et donc du clapet 90, vers l'extérieur du générateur de gaz 10, dans le sens représenté par la flèche D. L'orifice 16 formé dans la portion centrale 22 est donc ouvert et la section d'écoulement de gaz en sortie de la chambre de combustion 14 est augmentée. De cette manière, il est possible d'assurer le gonflage « lent » du coussin de sécurité 12 dans un cas où une collision a été détectée de façon anticipée.

En cas de disfonctionnement du premier système de détection 30, le second système de détection 32 actionne l'initiateur pyrotechnique 28 et le clapet 90 reste dans sa position initiale d'obturation de l'orifice 16, assurant ainsi un gonflage « rapide » du coussin de sécurité.

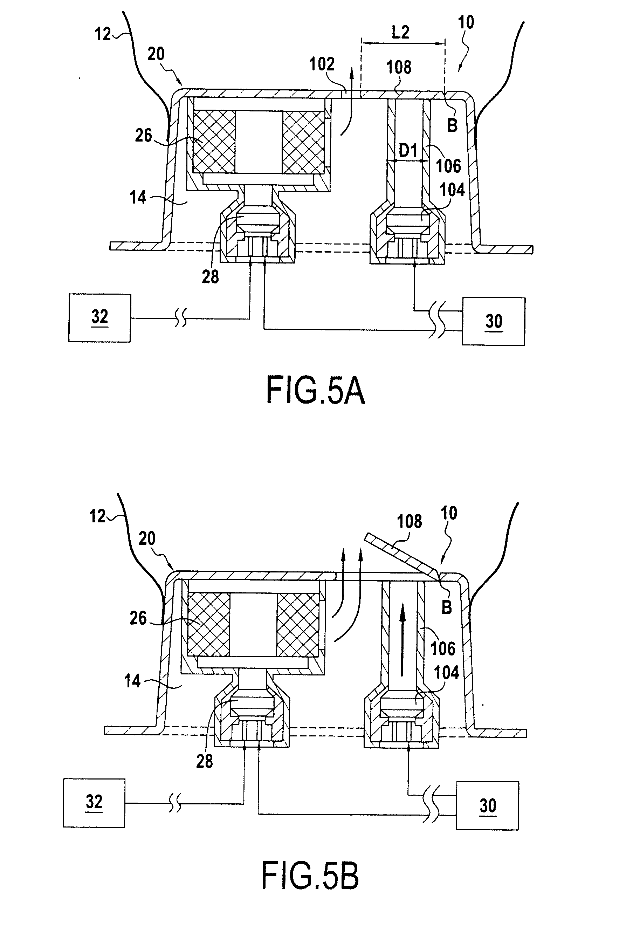

Les figures 5A et 5B illustrent un cinquième mode de réalisation d'un générateur de gaz 10 selon la présente invention.

Comme dans le quatrième mode de réalisation, le générateur de gaz 10 est agencé pour que la section d'écoulement des gaz soit réglée, par défaut, pour assurer un gonflage « rapide » du coussin de sécurité 12.

La figure 5A illustre le générateur de gaz 10 dans son état initial. Un orifice 102 est formé dans la paroi axiale extérieure 20 de la chambre de combustion 14. A l'état initial, cet orifice 102 est partiellement obturé par un clapet 108, apte à pivoter autour d'un axe B perpendiculaire à l'axe A de la chambre de combustion grâce à une charnière. Cette charnière peut être constituée par une simple incision réalisée dans la paroi d'extrémité extérieure de la chambre de combustion, conférant ainsi au clapet une certaine résistance à l'encontre des gaz libérés dans la chambre de combustion 14.

Le générateur de gaz 10 comprend toujours un initiateur pyrotechnique 28 relié au premier et au second système de détection de collision 30, 32 et pouvant être actionné par celui quelconque de ces deux systèmes ayant fonctionné en premier.

Le générateur de gaz 10 comprend en outre un initiateur d'actionnement pyrotechnique 104 relié au premier système de détection 30 et surmonté d'une cheminée cylindrique 106 débouchant sur le clapet 108 de la paroi d'extrémité axiale extérieure 20 de la chambre de combustion 14. Comme illustré sur la figure 5A, la largeur L2 du clapet est supérieure au diamètre D1 de la cheminée cylindrique 106.

Sous l'effet des gaz libérés dans la cheminée cylindrique 106 par une charge pyrotechnique allumée par l'initiateur d'actionnement pyrotechnique 104, le clapet 108 est apte à pivoter autour de l'axe B vers l'extérieur du générateur 10. Le clapet 108 étant plus large que la cheminée cylindrique 106, la section d'écoulement des gaz hors de la chambre de combustion 14 est augmentée.

Dans le cas évoqué précédemment où la charnière du clapet 108 est une simple incision réalisée dans la paroi d'extrémité extérieure 20 de la chambre de combustion 14, la résistance conférée au clapet 108 est telle que celui-ci ne se soulève que sous l'effet des gaz libérés dans la cheminée 106 suite au déclenchement de l'initiateur d'actionnement pyrotechnique 104.

Lorsque le premier système de détection 30 identifie qu'une collision est sur le point de se produire, il actionne conjointement l'initiateur pyrotechnique 28 et l'initiateur d'actionnement pyrotechnique 104 afin, d'une part, de démarrer le gonflage du coussin de sécurité 12 et, d'autre part, de faire pivoter le clapet 108 sous l'effet des gaz libérés dans la cheminée cylindrique 106 pour augmenter la section d'écoulement des gaz. De cette façon, la pression à l'intérieur de la chambre de combustion 14 est diminuée, le débit de sortie des gaz est diminué et le coussin de sécurité 12 est gonflé « lentement ».

En cas de disfonctionnement du premier système de détection 30, le second système de détection 32 n'actionne que l'initiateur pyrotechnique 28, lequel libère des gaz s'échappant vers le coussin de sécurité par l'orifice 102 dont la section, à cet instant, est minimale. Le coussin de sécurité est donc gonflé « rapidement ».

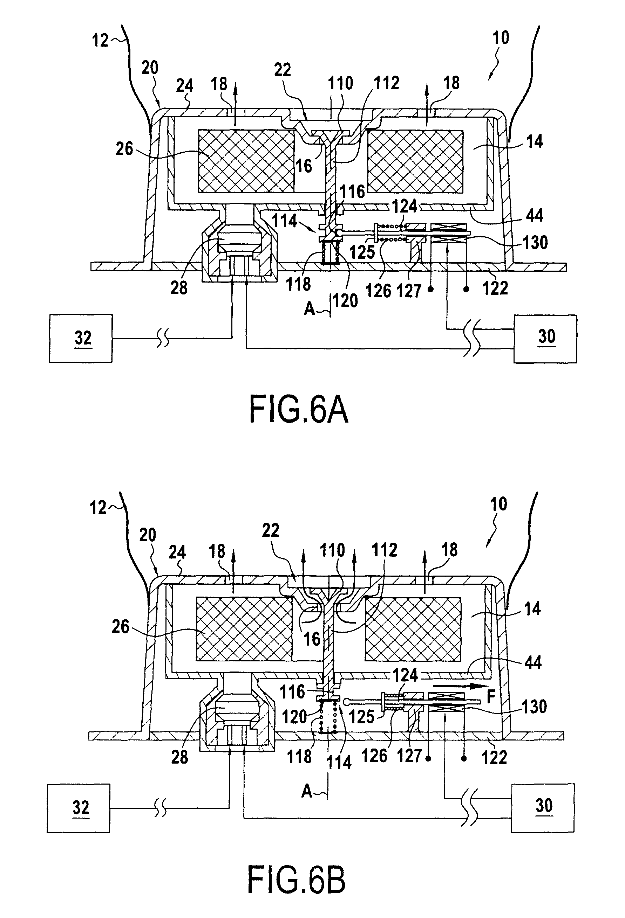

Sur les figures 6A et 6B, on a représenté un sixième mode de réalisation de l'invention.

Dans ce mode de réalisation, un orifice d'écoulement des gaz 16 prévu dans la portion centrale 22 de la chambre de combustion 14 est obturé, à l'état initial, par un clapet 110 en appui sur la face externe de la paroi d'extrémité extérieure 20 de la chambre de combustion 14. Ce clapet 110 est relié à une tige 112, qui traverse la chambre de combustion 14 et se termine, à son extrémité opposée située hors de la chambre de combustion, par une tête 114 dans laquelle est formé un logement d'ancrage 116. Dans l'exemple représenté sur les figures 6A et 6B, le logement d'ancrage 116 se présente sous la forme d'une rainure circonférentielle.

Le clapet 110 est contraint vers l'extérieur du générateur de gaz 10, dans la direction axiale A, par un ressort de compression 118, qui est en appui sur la face d'extrémité intérieure 120 de la tête 114 d'une part, et sur une paroi 122 du générateur de gaz 10 opposée à cette face d'extrémité intérieure 120 d'autre part.

Lorsque le générateur de gaz 10 se trouve dans son état initial, tel qu'illustré sur la figure 6A, l'orifice 16 de la chambre de combustion est obturé par le clapet 110. Le clapet 110 est maintenu dans cette position, contre la force de rappel du ressort 118 qui le sollicite vers l'extérieur, par une tige d'ancrage 124 s'étendant perpendiculairement à la tige 112 du clapet 110 et introduite, à l'état initial, dans le logement d'ancrage 116 de la tête 114.

La tige d'ancrage 124 traverse un support fixe 127 prévu dans le générateur de gaz 10. Elle comporte en outre une butée 125, destinée, avec un ressort de rappel 126 en appui contre le support fixe 127 d'une part et la butée 125 d'autre part, à contraindre la tige d'ancrage 124 dans le logement d'ancrage 116 de la tête 114.

La tige d'ancrage 124 est réalisée dans un matériau magnétisable, par exemple du fer doux. Comme illustré sur la figure 6A, elle est entourée d'une bobine électromagnétique 130, reliée au premier système de détection 30 destiné à détecter une collision imminente.

Sous l'effet d'une impulsion électrique, la bobine électromagnétique 130 est apte à entraîner le déplacement de la tige d'ancrage radialement vers l'extérieur, contre la force de rappel du ressort 126.

L'ensemble formé par la tige d'ancrage 124 et le logement d'ancrage 116 constitue une gâchette électromagnétique.

Le générateur de gaz 10 fonctionne de la manière suivante : Initialement, le clapet 110 obture l'orifice 16 de la chambre de combustion. Dans cette configuration, la section d'écoulement des gaz est égale à la somme des sections des orifices 18 formés dans la portion périphérique 24 de la paroi d'extrémité axiale extérieure 20. Le générateur de gaz 10 est adapté au cas d'une détection de collision avérée, nécessitant un gonflage « rapide » du coussin de sécurité 12.

La bobine électromagnétique 130 est alimentée par un générateur de courant relié au premier système de détection 30, apte à détecter une collision imminente. Si le premier système de détection 30 fonctionne, l'initiateur pyrotechnique 28 est déclenché pour initier la combustion de la charge pyrotechnique 26 et, simultanément, une impulsion électrique est envoyée à la bobine électromagnétique 130. Par magnétisation, la bobine électromagnétique 130 entraîne le déplacement de la tige d'ancrage 124 dans la direction radiale représentée par une flèche F sur la figure 6B. En se déplaçant radialement, la tige d'ancrage 124 se dégage du logement d'ancrage 116 et libère ainsi le déplacement axial du clapet 110 contraint par le ressort 118 vers l'extérieur du générateur de gaz 10 dans la direction de l'axe A. La course de la tige 112 est restreinte par la mise en butée de la tête 114 contre la paroi d'extrémité axiale intérieure 44 de la chambre de combustion 14. A cet instant, le clapet 110 est écarté de l'orifice 16 de la chambre de combustion 14 et la section d'écoulement des gaz est augmentée, de sorte que le coussin de sécurité 12 peut être gonflé « lentement ».

On notera que dans les trois derniers modes de réalisation décrits, correspondant aux figures 4A à 6B, il n'est plus possible, une fois le générateur 10 configuré pour un gonflage « lent » du coussin de sécurité 12, d'effectuer, dans un second temps, un gonflage rapide du coussin de sécurité après que le second système de détection a fonctionné. Pour ces trois modes de réalisation, et dans le cas où le premier système de détection 30 a fonctionné convenablement, le gonflage du coussin de sécurité ne peut plus se faire qu'à vitesse « lente ».

Selon un septième mode de réalisation proche du sixième mode de réalisation décrit ci-dessus, la gâchette électromagnétique du sixième mode de réalisation est remplacée par un fusible thermique, relié à un circuit électrique. Le fusible thermique, tout comme la tige des figures 6A et 6B, permet de maintenir la tige 112 du clapet 110 dans sa position rétractée en s'insérant dans le logement d'ancrage 116 de la tête 114. En cas de détection d'un choc imminent, le premier système de détection envoie une impulsion électrique au circuit électrique, ce par quoi le fusible thermique s'échauffe et fond, libérant ainsi la tige 112 du clapet 110. Le clapet 110 étant sollicité par un ressort 118 initialement sous contrainte, il se déploie instantanément vers l'extérieur du générateur de gaz 10 et libère l'orifice 16 de la chambre de combustion 14.

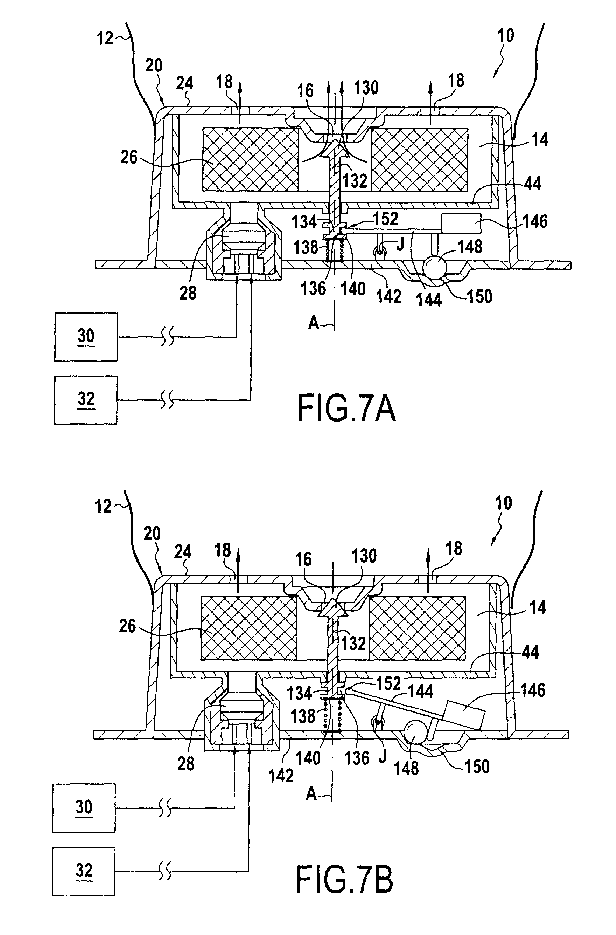

Les figures 7A et 7B illustrent un huitième mode de réalisation du générateur de gaz selon la présente invention.

Comme dans le sixième mode de réalisation représenté sur les figures 6A et 6B, le générateur de gaz comprend un clapet 130, apte à obturer un orifice 16 formé dans la paroi d'extrémité axiale extérieure 20 de la chambre de combustion 14. Le clapet est prolongé par une tige 132 elle-même terminée par une tête 134 dans laquelle est formé un logement d'ancrage 136. Comme dans le sixième mode de réalisation décrit précédemment, le clapet 130 est sollicité vers l'extérieur du générateur de gaz 10 par un ressort initialement sous contrainte 138, en appui contre la face d'extrémité intérieure 140 de la tête 134 et contre une paroi de support 142 du générateur de gaz 10 opposée à cette face intérieure 140.

Comme illustré sur la figure 7A, le clapet 130 présente ici une forme de pointeau.

Le clapet 130 est, au repos, maintenu dans une position d'ouverture de l'orifice 16 de la chambre de combustion 14. Dans cette position, le générateur de gaz 10 est adapté à un gonflage « lent » du coussin de sécurité, dans la mesure où la section d'écoulement des gaz hors de la chambre de combustion 14 est maximale.

Le clapet 130 est maintenu en position grâce à une tige d'ancrage 144 dont une extrémité est insérée dans le logement d'ancrage 136 de la tige 134 du clapet 130. La tige d'ancrage 144 est terminée par un poids 146 et supportée par une bille 148 positionnée dans un creux 150 formé dans la paroi 142 du générateur de gaz 10. Ces éléments constituent un dispositif inertiel s'activant à partir d'un seuil de décélération.

Lors d'un choc, sous l'effet de l'inertie due à la forte décélération du véhicule, la bille 148 est délogée du creux 150 dans lequel elle était positionnée. Sous l'effet du poids 146 lié à la tige 144, celle-ci pivote autour d'un axe de rotation J, libérant son extrémité 152 du logement d'ancrage 136 prévu dans la tête 134 de la tige 132.

Le clapet 130, contraint vers l'extérieur du générateur de gaz dans la direction axiale A par le ressort de compression 138, se déplace à l'intérieur de la chambre de combustion jusqu'à obturer l'orifice 16. Dans cet état, la section d'écoulement des gaz est diminuée, la pression à l'intérieur de la chambre de combustion est augmentée, de même que le débit de sortie des gaz et le gonflage du coussin de sécurité se fait rapidement.

Comme illustré sur les figures, l'initiateur pyrotechnique 28 est relié aux deux systèmes de détection 30 et 32. Lorsque le premier système de détection 30 fonctionne, le gonflage peut démarrer par une première phase « lente ». Ensuite, lorsque la collision intervient, le dispositif inertiel libère le clapet 130, et le gonflage se poursuit plus rapidement. Dans le cas où le premier système de détection 30 n'a pas fonctionné correctement, le second système de détection 32 déclenche l'initiateur pyrotechnique 28 au moment du choc, et le dispositif inertiel assure le réglage du générateur de gaz pour que le gonflage du coussin de sécurité puisse être réalisé suffisamment rapidement.

## Revendications

1. Système de sécurité destiné au gonflage d'un coussin de sécurité automobile, comprenant :
un premier système de détection (30) destiné à détecter un état de collision imminente,
un second système de détection (32) destiné à détecter un état de collision avérée, le système de securité étant **caractérisé en ce qu'**il comprend :
un générateur de gaz pyrotechnique (10) pour coussin gonflable de sécurité automobile (12), comprenant :
- une charge pyrotechnique,
- un initiateur pyrotechnique (28) situé dans une chambre de combustion (14) et apte à être actionné par le premier système de détection (30) ou par le second système de détection (32) ;
- un passage d'écoulement des gaz (16, 18, 18', 102) entre ladite chambre de combustion (14) et ledit coussin gonflable (12), et
- au moins un clapet (34, 54, 84, 90, 108, 110, 130) apte à être déplacé d'une première position dans laquelle il définit une première section d'écoulement à travers le passage d'écoulement des gaz vers une seconde position dans laquelle il définit une seconde section d'écoulement à travers le passage d'écoulement des gaz supérieure à ladite première section d'écoulement, ou inversement, ledit clapet (34, 54, 84, 90, 108, 110, 130) étant agencé de sorte que, si l'initiateur pyrotechnique (28) est actionné par le premier système de détection (30), le clapet définit la plus grande section d'écoulement lorsque l'initiateur pyrotechnique (28) est actionné, et si l'initiateur pyrotechnique (28) est actionné par le second système de détection (32), le clapet définit la plus petite section d'écoulement lorsque l'initiateur pyrotechnique (28) est actionné.

2. Système de sécurité selon la revendication 1, dans lequel le passage d'écoulement des gaz (16, 18, 18', 102) est constitué d'au moins deux
orifices formés dans la chambre de combustion (14), ledit clapet (34, 54, 84, 90, 108, 110, 130) étant apte à obturer au moins un desdits orifices.

3. Système de sécurité selon la revendication 1 ou 2, dans lequel ledit clapet (34, 54, 84, 90, 108) est apte à être déplacé sous l'effet de gaz libérés par une charge pyrotechnique allumée par un initiateur d'actionnement pyrotechnique (50, 66, 80, 100, 104).

4. Système de sécurité selon la revendication l'une quelconque des revendications 1 à 3, dans lequel ledit clapet (34) est un tiroir apte à être déplacé selon une trajectoire rectiligne.

5. Système de sécurité selon l'une quelconque des revendications 1 à 3, dans lequel le clapet (54) est un tiroir rotatif comprenant au moins une ouverture (64) apte à être positionnée en regard d'au moins un orifice (18) de la chambre de combustion (14) et au moins une rampe de guidage (72), ledit tiroir rotatif (54) étant apte à être déplacé sous l'effet d'un piston (70) actionné par des gaz libérés par une charge pyrotechnique allumée par un initiateur d'actionnement pyrotechnique (66) et coopérant avec ladite rampe de guidage (72).

6. Système de sécurité selon l'une quelconque des revendications 1 à 3, dans lequel ledit clapet (84, 130) a une forme de pointeau.

7. Système de sécurité selon la revendication 1 ou 2, dans lequel ledit clapet (130) est sollicité par un ressort (138) initialement sous contrainte et libéré par un dispositif inertiel (146, 148) s'activant à partir d'un seuil de décélération.

8. Système de sécurité selon la revendication 1 ou 2, dans lequel ledit clapet est sollicité par un ressort initialement sous contrainte et libéré par un fusible thermique connecté à un circuit électrique.

9. Système de sécurité selon la revendication 1 ou 2, dans lequel ledit clapet (110) est sollicité par un ressort (118) initialement sous contrainte et libéré par une gâchette électromagnétique (116, 124).

10. Combinaison d'un coussin gonflable pour sécurité automobile (12) et d'un système de sécurité selon l'une quelconque des revendications 1 à 9, ledit coussin gonflable (12) étant rattaché au générateur de gaz pyrotechnique.

## Patentansprüche

1. Sicherheitssystem, das für das Aufblasen eines Kraftfahrzeugairbags bestimmt ist, umfassend:
ein erstes Erfassungssystem (30), das dazu bestimmt ist, einen Zustand eines unmittelbar bevorstehenden Zusammenstoßes zu erfassen,
ein zweites Erfassungssystem (32), das dazu bestimmt ist, einen Zustand eines wahren Zusammenstoßes zu erfassen, wobei das Sicherheitssystem **dadurch gekennzeichnet ist, dass** es umfasst:
einen pyrotechnischen Gasgenerator (10) für einen Kraftfahrzeugairbag (12), umfassend:
- eine pyrotechnische Ladung,
- einen pyrotechnischen Zünder (28), der sich in einer Brennkammer (14) befindet und geeignet ist, durch das erste Erfassungssystem (30) oder durch das zweite Erfassungssystem (32) betätigt zu werden,
- einen Gasströmungsdurchgang (16, 18, 18', 102) zwischen der Brennkammer (14) und dem Airbag (12), und
- wenigstens ein Ventil (34, 54, 84, 90, 108, 110, 130), das geeignet ist, aus einer ersten Position, in der es einen ersten Strömungsquerschnitt durch den Gasströmungsdurchgang definiert, in eine zweite Position, in der es einen zweiten Strömungsquerschnitt durch den Gasströmungsdurchgang definiert, welcher größer als der erste Strömungsquerschnitt ist, bewegt zu werden oder umgekehrt, wobei das Ventil (34, 54, 84, 90, 108, 110, 130) derart angeordnet ist, dass, falls der pyrotechnische Zünder (28) durch das erste Erfassungssystem (30) betätigt wird, das Ventil den größten Strömungsquerschnitt definiert, wenn der pyrotechnische Zünder (28) betätigt wird, und, falls der pyrotechnische Zünder (28) durch das zweite Erfassungssystem (32) betätigt wird, das Ventil den kleinsten Strömungsquerschnitt definiert, wenn der pyrotechnische Zünder (28) betätigt wird.

2. Sicherheitssystem nach Anspruch 1, wobei der Gasströmungsdurchgang (16, 18, 18', 102) von wenigstens zwei in der Brennkammer (14) ausgebildeten Öffnungen gebildet ist, wobei das Ventil (34, 54, 84, 90, 108, 110, 130) geeignet ist, wenigstens eine der Öffnungen zu verschließen.

3. Sicherheitssystem nach Anspruch 1 oder 2, wobei das Ventil (34, 54, 84, 90, 108) geeignet ist, unter der Wirkung von Gasen, die durch eine durch einen pyrotechnischen Betätigungszünder (50, 66, 80, 100, 104) gezündete pyrotechnische Ladung freigesetzt werden, bewegt zu werden.

4. Sicherheitssystem nach einem der Ansprüche 1 bis 3, wobei das Ventil (34) ein Schieber ist, welcher geeignet ist, in einer geradlinigen Bahn bewegt zu werden.

5. Sicherheitssystem nach einem der Ansprüche 1 bis 3, wobei das Ventil (54) ein Drehschieber ist, der wenigstens eine Öffnung (64), welche geeignet ist, gegenüber wenigstens einer Öffnung (18) der Brennkammer (14) positioniert zu werden, sowie wenigstens eine Führungsrampe (72) umfasst, wobei der Drehschieber (54) geeignet ist, unter der Wirkung eines Kolbens (70) bewegt zu werden, der durch Gase, welche durch eine durch einen pyrotechnischen Betätigungszünder (66) gezündete pyrotechnische Ladung freigesetzt werden, betätigt wird und mit der Führungsrampe (72) zusammenwirkt.

6. Sicherheitssystem nach einem der Ansprüche 1 bis 3, wobei das Ventil (84, 130) eine Nadelform aufweist.

7. Sicherheitssystem nach Anspruch 1 oder 2, wobei das Ventil (130) durch eine Feder (138) belastet wird, die anfangs unter Spannung ist und durch eine Trägheitsvorrichtung (146, 148), welche ab einer Verzögerungsschwelle in Bewegung ist, freigegeben wird.

8. Sicherheitssystem nach Anspruch 1 oder 2, wobei das Ventil durch eine Feder belastet wird, welche anfangs unter Spannung ist und durch eine an einen Stromkreis angeschlossene Schmelzsicherung freigegeben wird.

9. Sicherheitssystem nach Anspruch 1 oder 2, wobei das Ventil (110) durch eine Feder (118) belastet wird, die anfangs unter Spannung ist und durch einen elektromagnetischen Abzug (116, 124) freigegeben wird.

10. Kombination aus einem Kraftfahrzeugairbag (12) und aus einem Sicherheitssystem nach einem der Ansprüche 1 bis 9, wobei der Airbag (12) mit dem pyrotechnischen Gasgenerator verbunden ist.

## Claims

1. A safety system for inflating a car airbag, the system comprising:
a first detection system (30) for detecting an imminent collision state,
a second detection system (32) for detecting an actual collision state,
the safety system being **characterized in that** it comprises:
a pyrotechnic gas generator (10) for a car airbag (12), comprising :
- a pyrotechnic charge,
- a pyrotechnic initiator (28) situated in a combustion chamber (14) and suitable for being actuated by the first detection system (30) or by the second detection system (32),
- a gas flow passage (16, 18, 18', 102) between said combustion chamber (14) and said airbag (12), and
- at least one valve (34, 54, 84, 90, 108, 110, 130) suitable for being moved from a first position in which it defines a first flow section through the gas flow passage to a second position in which it defines a second flow section through the gas flow passage greater than said first flow section, or vice versa, said valve (34, 54, 84, 90, 108, 110, 130) being arranged in such a manner that it defines the greater flow section when the pyrotechnic initiator is actuated if the pyrotechnic initiator (28) is actuated by the first detection system (30), and it defines the smaller flow section when the pyrotechnic initiator (28) is actuated if the pyrotechnic initiator (28) is actuated by the second detection system (32).

2. The safety system according to claim 1, wherein the gas flow passage (16, 18, 18', 102) is constituted by at least two orifices formed in the combustion chamber (14), said valve (34, 54, 84, 90, 108, 110, 130) being suitable for closing at least one of said orifices.

3. The safety system according to claim 1 or claim 2, wherein said valve (34, 54, 84, 90, 108) is suitable for being moved under the effect of the gas released by a pyrotechnic charge ignited by a pyrotechnic actuation initiator (50, 66, 80, 100, 104).

4. The safety system according to any one of claims 1 to 3, wherein said valve (34) is a slider suitable for being moved along a rectilinear path.

5. The safety system according to any one of claims 1 to 3, wherein the valve (54) is a turnable slider having at least one opening (64) suitable for being positioned in register with at least one orifice (18) of the combustion chamber (14) and at least one guide ramp (72), said turnable slider (54) being suitable for being moved under the effect of a piston (70) actuated by the gas released by a pyrotechnic charge ignited by the pyrotechnic actuation initiator (66) and co-operating with said guide ramp (72).

6. The safety system according to any one of claims 1 to 3, wherein said valve (84, 130) is in the form of a valve needle.

7. The safety system according to claim 1 or claim 2, wherein said valve (130) is biased by a spring (138) that is initially stressed and that is released by an inertial device (146, 148) that is activated as from a detection threshold.

8. The safety system according to claim 1 or claim 2, wherein said valve is biased by a spring that is initially stressed and that is released by a thermal fuse connected to an electric circuit.

9. The safety system according to claim 1 or claim 2, wherein said valve (110) is biased by a spring (118) that is initially stressed and that is released by an electromagnetic trigger (116, 124).

10. The combination of a car airbag (12) and a safety system according to any one of claims 1 to 9, said airbag (12) being attached to the pyrotechnic gas generator.
